# EUROPÄISCHE PATENTSCHRIFT

(11) **EP 3 400 123 B1**
(45) Veröffentlichungstag und Bekanntmachung des Hinweises auf die Patenterteilung: **03.11.2021**
(21) Anmeldenummer: 16700531.3
(22) Anmeldetag: 04.01.2016
(51) Int. Cl.: B29C 48/08, B29C 48/88, B29C 48/92, B29C 48/27, B29C 39/16, B29C 41/26

(54) **VORRICHTUNG ZUM KÜHLEN VON FOLIENMATERIAL**
DEVICE FOR COOLING FILM MATERIAL
DISPOSITIF DE REFROIDISSEMENT DE MATÉRIAU EN FEUILLE

(43) Veröffentlichungstag der Anmeldung: 14.11.2018
(73) Patentinhaber: GloBra GmbH, 5020 Salzburg (AT)
(72) Erfinder: PINEGGER, Wolfgang, 8971 Schladming-Rohrmoos (AT)
(74) Vertreter: 2s-ip Schramm Schneider Bertagnoll Patent- und Rechtsanwälte Part mbB
(86) Internationale Anmeldenummer: PCT/EP2016/050033
(87) Internationale Veröffentlichungsnummer: WO 2017/118471

(56) Entgegenhaltungen:
- EP-A1- 2 546 056
- WO-A2-00/50208
- GB-A- 492 372
- GB-A- 492 372
- GB-A- 492 372
- JP-A- S49 108 163
- JP-A- S49 108 163
- JP-A- S49 108 163
- US-A- 1 590 999
- US-A- 1 590 999
- US-A- 3 860 680
- US-A- 3 860 680
- US-A- 4 696 779
- US-A- 4 696 779
- US-A- 4 696 779

## Beschreibung

Die vorliegende Erfindung betrifft eine Vorrichtung zum Kühlen von Folienmaterial. Derartige Vorrichtungen werden eingesetzt bei der Herstellung von Folienmaterial, insbesondere Endlosfolien, aus Kunststoff.

Die Herstellung solcher Endlosfolien erfolgt, indem aufgeschmolzenes Kunststoffgranulat (die sogenannte Schmelze) auf eine sich drehende Kühlwalze ("Chill Roll", CR) aufgebracht wird, wo es einen Folienfilm bildet und von wo es unter Kühlung mit der sich drehenden Kühlwalze mitgenommen und dann von der Kühlwalze separiert und weitertransportiert wird. Dem raschen und kontrollierten Abkühlen des Polymers und der damit verbundenen Steuerung und Beeinflussung des Kristallisationsprozesses kommt besondere Bedeutung zu im Hinblick auf die thermischen, mechanischen, optischen Dichtheits- und anderen Eigenschaften der Folie auch im Hinblick auf deren Weiterverarbeitung. Im Rahmen dieser Weiterverarbeitung anschließen können sich Phasen des Wiederaufheizens und Streckens des Folienfilms in Folien-Transportrichtung (Machine Direction Oriented, MDO), quer zur Transportrichtung (Transverse Direction Oriented, TDO) oder sequentiell oder simultan in beide Richtungen (Biaxially Oriented, BO), jeweils unter weiterer Wärmezufuhr und schließlich Abkühlen, Randbeschneiden und Aufwickeln des Folienmaterials auf eine Rolle.

Im Folgenden wird die Folie in allen Prozessphasen bzw. Herstellungsstadien u.a. mit dem Oberbegriff "Folienmaterial" bezeichnet, gleichgültig, ob es sich um das mehr oder minder zähflüssige Ausgangsmaterial der Folien, also die Schmelze, den auf der Oberfläche des Kühlkörpers entstandenen Folienfilm oder die hiervon separierte Folienbahn, ohne, vor oder nach Streckung, handelt. Aus dem Kontext und insbesondere aus der Beschreibung des jeweiligen Prozessschrittes ergibt sich eindeutig, welcher spezielle Zustand des Folienmaterials jeweils angesprochen ist. Bei den Folien kann es sich um alle Typen handeln, die durch Aufbringen eines Materials aus einer Schmelze per Extrusion z.B. mittels Flachdüse in einer oder mehreren Lagen auf die Oberfläche einer rotierenden Kühlwalze und die dadurch bedingte anschließende Abkühlung hergestellt werden können. Das betrifft auch Folien, welche gleichzeitig auf der walzenabgewandten Seite mittels Luft, Wasser oder durch weitere Walzen oder in anderer Weise abgekühlt werden können. Das betrifft jedenfalls aber nicht ausschließlich alle polyolefinen Rohstoffe wie Polypropylen (PP) und Polyethylen (PE), Polyester (z.B. PET), Polyamid, Polyactide (PLA), Polystyrene, Polykarbonate, und alle, die unter die Definition von oben fallen.

Im Unterschied zu Folien aus anderen Polymeren kommt es bei den Folien aus thermoplastischen teilkristallinen Polymeren wie beispielsweise Polypropylen, Polyethylen und Polyester darauf an, die Schmelze möglichst schnell und möglichst stark in einen vorbestimmten Temperaturbereich abzukühlen, um damit die Kristallisation zu beeinflussen.

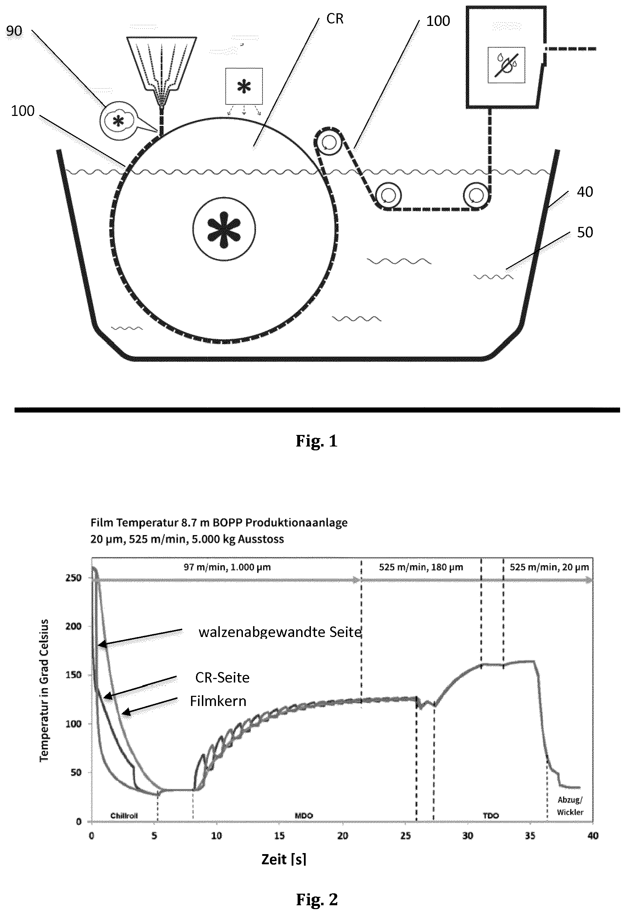

Bei einem bekannten Herstellungsverfahren kommt die Schmelze (ca. 260 Grad beim Folienmaterial PP) aus einer Flachdüse und wird zur raschen Abkühlung auf die Kühlwalze aufgebracht und angelegt. Fig. 1 zeigt eine hierbei zum Einsatz kommende Kühlvorrichtung des Standes der Technik. Die Kühlvorrichtung umfasst eine Kühlwalze CR, die in einem Wasserbad 40, 50 läuft. Das aufgebrachte Folienmaterial wird auf seiner walzenzugewandten Seite durch die Kühlwalze gekühlt, die ihrerseits mittels Wasser, das in innen verlaufenden Kühlkanälen strömt, oder durch Sprayen von Wasser gegen den Walzenmantel von innen gekühlt wird.

Die Kühlung der walzenabgewandten Seite des Folienmaterials erfolgt im Fall von PP, wo zum Anlegen ein Luftmesser 90 verwendet wird, zunächst durch den Luftstrom des Luftmessers und dann durch das Wasserbad, in welches die Kühlwalze mit dem Folienmaterial eintaucht. Andere Folienmaterialien, wie z.B. Polyester, werden durch elektrostatische Pinning-Verfahren an die Kühlwalze angelegt und müssen ausschließlich durch die Kühlwalze, also von der CR-Seite, gekühlt werden.

Fig. 2 zeigt Temperaturverläufe bei der Herstellung von biaxial sequentiell verstreckter PP-Folie bei einer nominalen Produktionskapazität der Anlage von 5.000 kg/h und einer Folienenddicke von 20 µm beim Abkühlvorgang des Folienmaterials mittels der oben beschriebenen bekannten Kühlvorrichtung. Hierin zeigen die markierten Linien den Temperaturverlauf der walzenabgewandten Seite und der walzenzugewandten Seite des Folienmaterials sowie den Temperaturverlauf im Folienkern, jeweils über der Zeit.

Die Abkühlung des Folienmaterials erfolgt in diesem Beispiel zuerst sehr rasch auf der walzenzugewandten (CR-) Seite durch die kalte Oberfläche der CR, auf der walzenabgewandten Seite (Außenseite) ebenfalls rasch aber langsamer durch den Kühleffekt des Luftmessers. Nach Eintritt in das Wasserbad wird die walzenabgewandte Seite stärker gekühlt, ebenfalls bei Umlenkung auf eine etwaige weitere Kühlwalze. Die Kühlung des Filmkerns erfolgt nur über die Oberflächen des Films und tritt entsprechend verzögert ein. Ein homogenes Temperaturprofil durch den Querschnitt entsteht in diesem Beispiel erst kurz nachdem der Film die CR-Oberfläche verlässt. Im Einzelnen verlaufen diese Phasen wie folgt:
Der Abkühlprozess ("Casting") findet am Beginn statt, und zwar mit einer Schmelze von 260 Grad. In diesem Beispiel geschieht das Abkühlen mittels einer über im Walzenmantel befindliche Kühlkanäle gekühlten Kühlwalze und einem Wasserbad nach Düsenaustritt (Platz für Luftmesser).

Der erste sehr rasche Kühleffekt erfolgt auf der walzenzugewandten Filmseite durch die kalte CR und auf der walzenabgewandten Seite über das Luftmesser.

Nach Eintritt in das Wasserbad erfolgt die Kühlung des Folienmaterials auf der Unterseite (hier noch die Außenseite) durch das Wasser. Die erste sehr rasche Abkühlung von 260 Grad erfolgt etwas schneller auf der CR-Seite, dennoch werden die beiden Außenseiten recht schnell ziemlich gleichmäßig auf ca. 130 Grad heruntergekühlt.

Damit ist dieser Kühleffekt auf ca. 130 Grad bereits kurz nach Eintritt in das Wasserbad erreicht. Ab diesem Moment verliert die CR-Seite des Folienmaterials markant in der Kühlleistung, denn die CR hat sich zu sehr aufgeheizt, die Wasserbadseite des Folienmaterials kühlt nun rascher ab. Die Temperaturkurve der CR-Seite verbessert sich erst wieder, wenn der Film die CR verlässt und in diesem Beispiel in ein weiteres Mal ins Wasserbad eintaucht und das Wasser an beide Seiten herankommt.

Der Film war damit ungefähr während einer halben Umschlingung der CR im Wasserbad. Die CR-Seite des Filmmaterials holt im Wasserbad schlagartig auf, und diese beiden Temperaturkurven treffen sich dann nach kurzer Zeit mit der immer "nachhinkenden" Kerntemperatur dadurch, dass die Folie nach Ablenkung von der CR wieder ins Wasserbad eintaucht.

Somit wird der jeweils notwendige Kühleffekt im Fall der Kühlung durch das Wasserbad an den Außenseiten des Filmmaterials sehr schnell erreicht. Der Kühleffekt im Filmkern hinkt aber entsprechend nach.

Der weitere Abkühlprozess in diesem Beispiel bis herunter auf 30 Grad findet nur deshalb statt, weil das System weiterläuft und die angestrebte homogene Temperatur bis in den Kern der Folie erst durch die Kühlung des von der CR separierten Folienmaterials im Wasserbad erreicht wird.

Wie in Fig. 2 im Bereich von Sekunde 9 bis 26 und 27 bis 31 zu erkennen ist, wird das Folienmaterial anschließend wieder erhitzt, in diesem Beispiel auf ca. 130 Grad bzw. 150 Grad, um MDO- bzw. TDO-verstreckt zu werden.

Jedes über das erforderliche Ausmaß hinausgehende Herunterkühlen verbraucht im Falle weiterer notwendiger Aufheizprozesse z.B. im Zusammenhang mit einer Verstreckung unnötige Energie.

Im Ergebnis wird der Film, um das Ziel einer sehr raschen und homogenen Abkühlung des Films zu erreichen, also häufig weiter und länger abgekühlt, als dies für das Erreichen der geforderten Eigenschaften und Qualitätsmerkmale notwendig wäre.

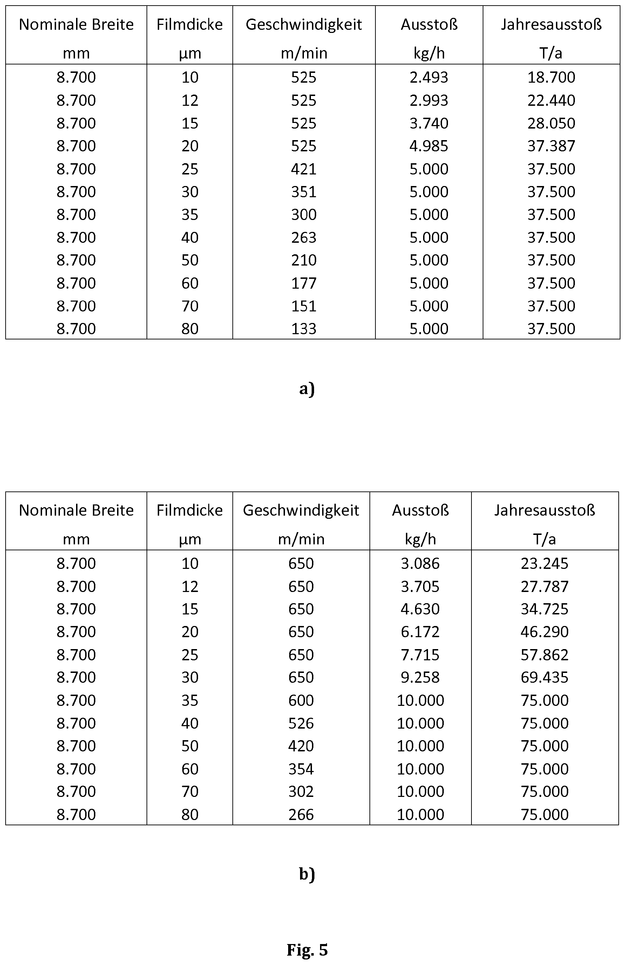

Andererseits definiert die Kühlleistung aber die üblichen Ausstoßtabellen. Fig. 5, Tabelle a) zeigt den Durchsatz in kg pro Stunde und Tonnen pro Jahr für Folien verschiedener Dicken und Anlagengeschwindigkeiten am Beispiel einer BOPP-Folie unter Verwendung einer Chill Roll zur Kühlung des extrudierten Folienmaterials. Die 5.000 kg/h (37.500 Tonnen/Jahr) sind zu erreichen bei maximaler Kühlleistung der CR-Anlage, bei dickeren Folien muss die Geschwindigkeit gesenkt werden, da die CR-Anlage die erforderliche Kühlleistung nicht mehr aufbringen kann. Bei dünneren Folien ist die Anlagengeschwindigkeit (hier 525 m/min) der limitierende Faktor für den Ausstoß in kg. Das bedeutet die mechanische Auslegung der Anlage muss allen gewünschten Dickenbereichen entsprechen und ist damit bezogen auf die einzelnen Foliendicken und deren Anforderungen an die gewünschten Eigenschaften wenig flexibel.

Die Kühlwalzen scheinen aber am Ende der mechanischen Möglichkeiten angekommen zu sein. Die Fläche der Kühlwalze und die Zeit, innerhalb derer das Folienmaterial auf der Kühlwalze transportiert wird, sowie die Zeit, innerhalb derer die Kühlwalze nach Separieren des Folienmaterials wieder abgekühlt werden kann, definiert die Kühlleistung der Kühlwalze und damit den Durchsatz der Anlage.

Das kommt unter Anderem daher, dass die Zeit, in der sich die CR wieder abkühlen kann, für die neue Schmelze mit den größeren Geschwindigkeiten immer kleiner wird, und die Oberfläche, wenn neue Schmelze auf sie trifft, nicht mehr maximal kalt ist. Hinzu kommt, dass die Oberfläche der CR hier auch noch vom Wasser befreit werden muss, für das Reinigen bleibt weder Raum noch Zeit.

Mit einem CR-Durchmesser von ca. 3 m, der notwendigen feinen Oberfläche und der geforderten Rundlaufgenauigkeit entstehen weitere Probleme aus dem Spiel der Achse, dem großen Radius und der Oberfläche. Große Kühlwalzen mit glatter Oberfläche und hohen Anforderungen an die Rundlaufgenauigkeit sind demgegenüber in der Fertigung aufwendig. Dasselbe gilt für die Logistik solcher Walzen. Die sich mit dem Umfang erhöhende Anforderung an die Stabilität der Walzen erfordert mechanische Konzepte und Materialien bzw. Materialstärken, die dazu neigen, den erforderlichen Temperaturaustausch negativ zu beeinflussen. Daher ist es immer schwieriger, die Rundlaufgenauigkeit im Sinn eines immer gleichbleibenden Abstandes zwischen Düsenlippe und CR-Oberfläche optimal zu erhalten. Auch ist die CR mit ihrer Oberfläche ein sehr kritisches Ersatzteil, jede Beschädigung führt zu einem sehr schwierigen Gesamtaustausch und möglicherweise zu sehr langem Stillstand der Anlage.

GB 492 372 A betrifft eine Vorrichtung zur Herstellung von Endlosfolie, welche ein Transportband umfasst, auf welches flüssige Zellulose aufgebracht wird. Das Endlosband ist um zwei Walzen herumgeführt, die außerhalb von Kühlflüssigkeit liegen.

JP S49 108163 A betrifft eine Vorrichtung zur Herstellung von Folie, bei welcher ein Endlosband in ein Kühlflüssigkeitsbad eingetaucht ist. Eine Einrichtung zum Entfernen von Wasser durch Abblasen ist nicht gezeigt.

US 4 696 779 A betrifft eine Vorrichtung zum Herstellen von Folie mit einem Endlosband, welches mittels Wasser gekühlt wird, das über Düsen auf das Band gesprüht wird.

EP 2 546 056 A 1 betrifft ein Verfahren zum Herstellen einer transparenten, laminierten Folie, bei welchem die laminierte Folie gebildet wird durch schnelles Kühlen des kristallinen Harzes für die erste Basisschicht und des kristallinen Harzes für die zweite Basisschicht.

WO 00/50208 A2 betrifft Verfahren und Vorrichtungen zum kontinuierlichen Formen eines Befestigungsproduktes unter Verwendung eines Gussform-Bandes, auf welchem die Folienform-Basis des Produktes gebildet wird und von welchem es nachfolgend abgelöst wird.

Aufgabe ist es, eine Kühlvorrichtung für Folienmaterial bereitzustellen, mit welchen die beschriebenen Nachteile zumindest teilweise beseitigt werden können.
Diese Aufgabe wird durch die Vorrichtungen gemäß den Ansprüchen gelöst.
Bereitgestellt wird demnach eine Vorrichtung zum Kühlen von Folienmaterial für Reckfolien, aufweisend:
ein bewegliches Band, wobei das Band zur Aufnahme des Folienmaterials an einer ersten vorbestimmten Stelle der Vorrichtung, zum Transport des aufgenommenen Folienmaterials und zur Abgabe des Folienmaterials an einer zweiten vorbestimmten Stelle bestimmt ist,
eine erste Walze und eine zweite Walze, wobei das Band über die erste Walze und über die zweite Walze geführt ist,
wobei die Vorrichtung ausgestaltet ist, das aufgenommene Folienmaterial und/oder das Band zu kühlen,
ein Kühlflüssigkeitsbad, wobei das Band und das Folienmaterial durch das Kühlflüssigkeitsbad hindurch bewegbar sind,
wobei die erste vorbestimmte Stelle in einem Bereich liegt, wo das Band an der ersten Walze anliegt und die erste Walze in Drehrichtung zusammen mit dem Band in das Kühlflüssigkeitsbad eingetaucht ist,
wobei die zweite vorbestimmte Stelle in einem Bereich liegt, wo das Band an der zweiten Walze anliegt, gekennzeichnet durch
eine Einrichtung zum Entfernen von Wasser auf dem Band durch Abblasen, wobei die Abblasung die erste Einrichtung in Bandlaufrichtung bei der zweiten Walze ist.

Die Erfindung ist mit zahlreichen Vorteilen verbunden.

Die Nachteile und Probleme in Verbindung mit der Rundlaufgenauigkeit von großen Walzen werden vermieden, da die Bandanlage mit wesentlich geringeren Radien der Umlenkwalzen auskommt.

Die leichtere Austauschbarkeit des Bandes im Vergleich zu großen Kühlwalzen ist ebenfalls ein erheblicher Vorteil. Denn große Walzen sind kritisch, und sie können nur unter erheblichem Aufwand und Produktionsverlusten ausgetauscht werden.

Der Folienmaterial auf dem Band wird schneller abgekühlt, weil sich das Band seinerseits besser kühlen lässt als eine Chill Roll. Denn das Band lässt sich prin-

Die erste vorbestimmte Stelle kann sich oberhalb des Flüssigkeitsspiegels des Kühlflüssigkeitsbades befinden.

Die Kühleinrichtung, insbesondere das Kühlflüssigkeitsbad, kann einen Behälter und eine Kühlflüssigkeit umfassen. Die Kühlflüssigkeit kann Wasser umfassen.

Die erste Walze bei der Düse kann als eine kühlende Walze ausgestaltet sein, diese kann geschlossen und durch Kanäle im Walzenmantel, oder durch Sprayen von innen gekühlt werden. Sie kann aber wie ein Wasserrad seitlich offen sich nur im Wasserbad drehen und kaltes Wasser wird innen zugeführt und aufgesprüht. Die zweite Walze kann gleich aufgebaut sein, also wieder kühlen oder nur mehr umlenken.

Die Kühlung der bandabgewandten Seite (Außenseite) durch Wasserbad etc. bekommt damit Unterstützung von der bandzugewandten Seite (Innenseite).

Ein "Nachhinken" der Kühlung der Innenseite im Fall eines Wasserbades kann verhindert bzw. vermindert werden, da das Band kälter sein kann und die Folie bei dem geringeren Radius der düsenseitigen Bandumlenkung bzw. eine weitere verstellbare Umlenkwalze rascher vom Band gelöst werden kann und z.B. das Wasserbad für beide Seiten sowie auf die weitere Abkühlung des Bandes wirken kann.

Das Folienmaterial kann, wenn erforderlich, auch bei einer zweiten Walze oder weiteren Walzen, die das Band umläuft, am Band belassen und so weiter gekühlt werden.

Die Kühlung lässt sich also wesentlich besser kontrollieren und steuern.

Damit erhält man eine verbesserte Kühlleistung und eine den jeweils erforderlichen Eigenschaften, Qualitätsparameter und Foliendicken entsprechend bezüglich des Abkühlverhaltens flexibel einstellbare Anlage mit den entsprechenden Vorteilen beim Verbrauch von Kühlenergie und im Falle eines Wiederaufheizens, wie bei Reckfolien erforderlich.

Die Oberfläche des Bandes wird nur so lange durch die heiße Folie warm gehalten, wie das unbedingt nötig ist, danach erhält die Folie alleine die entsprechende Kühlenergie.

Das Band läuft auf seiner Innenseite (also der Seite, mit der das Band an den Walzen) frei im kalten Wasserbad und wird dadurch gekühlt. Sobald die Folie vom Band weggeführt wird, wird das Band auch auf seiner Außenseite vom Wasser gekühlt. Das Band umläuft danach eine weitere Kühl-/Umlenkwalze wahlweise mit oder ohne Folie und wird dabei weiter abgekühlt. Dem Band verbleibt sodann eine weitere Strecke, auf welcher es je nach Bedarf in jeglicher Weise, eventuell mit kalter Luft vom Wasser befreit und auch gereinigt, weiter abgekühlt und die Temperatur vor dem Auftreffen der neuen Schmelze gemessen werden kann. Diese Messung erlaubt ein optimales Anpassen der jeweiligen Kühlsituation und der Wassertemperatur auf die entsprechende Produktionssituation.

Die Vorrichtung kann weiter aufweisen: Eine Spanneinrichtung für das Band.

Die Vorrichtung kann weiter aufweisen: Eine Einrichtung zum Separieren des Folienmaterials vom Band an der zweiten vorbestimmten Stelle.

Die Vorrichtung kann weiter aufweisen: Eine Luft- oder andere Kühlungseinrichtung zur Kühlung des Bandes in einem Bereich zwischen der zweiten vorbestimmten Stelle und der ersten vorbestimmten Stelle.

Die Vorrichtung kann weiter aufweisen: Ein Anlegesystem für die Schmelze, insbesondere ein Luftmesser oder ein elektrostatisches Pinning-System.

Die Vorrichtung kann weiter aufweisen: Zumindest eine dritte Walze, wobei die zumindest eine dritte Walze angeordnet ist, um das Folienmaterial und/oder das Band zu führen.

Die zumindest eine dritte Walze kann angeordnet sein, um das Folienmaterial vom Band abzulösen.

Die Spanneinrichtung kann die zweite Walze und/oder die dritte Walze umfassen.

Die zweite Walze und/ oder die zumindest eine dritte Walze können einen kleineren Durchmesser hat als die erste Walze haben.

Die zweite Walze bzw. weitere Umlenkwalzen sind beliebig in ihren Positionen einstellbar, das bedeutet, man kann sie jeweils im Flüssigkeitsbad oder außerhalb anordnen.

Z.B. zumindest eine eventuelle weitere Walze in diesem Beispiel im Wasserbad, welche horizontal und vertikal einstellbar ist, ermöglicht ein gezieltes Ablenken der Folie vom Band, weitere Umlenkwalzen für die Folie, die ebenfalls horizontal und vertikal einstellbar sind, ermöglichen einen kürzeren oder längeren Verbleib der Folie im Wasserbad.

Das Wasserbad, das im Gegensatz zur Anlage mit großer Chill Roll nicht hoch und tief sein muss sondern lang und flach sein kann, ist wesentlich leichter zu betreiben.

Auf der Strecke zurück zur Düse kann das Band dann leicht von Wasser befreit und von anderen Verschmutzungen von der Folie oder aus dem Wasserbad gereinigt werden.

In der Folge kann das Band über jedwede technisch mögliche Kühleinrichtung weiter abgekühlt werden und diese Abkühlung gemessen und entsprechend gesteuert werden.

Die Vorrichtung kann weiter aufweisen: Eine Einrichtung zum Messen von Temperaturen des Bandes an vorbestimmten Stellen und /oder zumindest einer der Walzen und/oder der Kühleinrichtung und zum Beeinflussen der Kühlleistung der Kühleinrichtung(en) in Abhängigkeit von den gemessenen Temperaturen.

Die Vorrichtung kann weiter aufweisen: eine Kontrolleinrichtung zum Kontrollieren zumindest eines von Trocknung, Verunreinigung, Temperatur Folienmaterials.

Die Vorrichtung kann weiter aufweisen: Eine Reinigungsvorrichtung zum Ablösen von Anhaftungen vom Band.

Des Weiteren ermöglicht die Rücklauflänge des Bandes das Anordnen weiterer Einrichtungen zum Reinigen, Trocknen, Kühlen, Temperaturmessen sowie optischer und anderer Kontrolleinrichtungen jeweils bezogen auf das Band.

Das Folienmaterial kann eines von polyolefinen Rohstoffen, Polyester, Polyamid, PLA, Polystyrenen, Polykarbonaten sein.

Das Folienmaterial kann allgemein ein teilkristalliner thermoplastischer Kunststoff sein.

In der Folge kann das Band über jedwede technisch mögliche Kühleinrichtung weiter abgekühlt werden und diese Abkühlung gemessen und entsprechend gesteuert werden.

Die Vorrichtung kann weiter aufweisen: Eine Einrichtung zum Messen von Temperaturen des Bandes an vorbestimmten Stellen und /oder zumindest einer der Walzen und/oder der Kühleinrichtung und zum Beeinflussen der Kühlleistung der Kühleinrichtung(en) in Abhängigkeit von den gemessenen Temperaturen.

Die Vorrichtung kann weiter aufweisen: eine Kontrolleinrichtung zum Kontrollieren zumindest eines von Trocknung, Verunreinigung, Temperatur Folienmaterials.

Die Vorrichtung kann weiter aufweisen: Eine Reinigungsvorrichtung zum Ablösen von Anhaftungen vom Band.

Des Weiteren ermöglicht die Rücklauflänge des Bandes das Anordnen weiterer Einrichtungen zum Reinigen, Trocknen, Kühlen, Temperaturmessen sowie optischer und anderer Kontrolleinrichtungen jeweils bezogen auf das Band.

Das Folienmaterial kann eines von polyolefinen Rohstoffen, Polyester, Polyamid, PLA, Polystyrenen, Polykarbonaten sein.

Das Folienmaterial kann allgemein ein teilkristalliner thermoplastischer Kunststoff sein.

Bei Folien, welche nicht über ein Wasserbad gekühlt werden, wie z.B. Polyesterfolien (PET), erfolgt die Kühlung alleine über das Band, welches über die als Kühlwalzen ausgestatteten Umlenkwalzen und/oder andere mögliche Kühleinrichtungen am Rücklauf des Bandes seinerseits gekühlt wird. Auch hier gilt, dass über die Wahl der Länge des Bandes eine verbesserte und besser einstellbare Kühlleistung erreicht werden kann. Diese verbesserte Kühlleistung und Temperaturkontrolle ist hier umso wichtiger, weil z.B. das Polyesterfolienmaterial, bei Folien bei welchen das Wasserbad entfällt wie PET-Folien und die noch wesentlich heißer und flüssiger als z.B. PP-Schmelze auf das Band kommt. Hier erfolgt die gesamte Kühlung von innen durch den Kern nach außen; die genaue Steuerungsmöglichkeit und ein sehr kaltes Band sind von großer Bedeutung.

Die Vorrichtung kann weiter aufweisen: Eine Extrudiervorrichtung zum Aufschmelzen und Aufbringen des Folienmaterials auf das Band, insbesondere mit einer flachen Düse. Das Folienmaterial kann dann mittels einer Extrudiervorrichtung, insbesondere mit einer flachen Düse, auf das Band aufgebracht werden.

Die Erfindung und Ausführungsbeispiele werden anhand der Zeichnung näher beschrieben. Hierin zeigt
Fig. 1 eine konventionelle Kühlvorrichtung mittels Kühlwalze (Chill Roll) und Wasserbad;
Fig. 2 Temperaturverläufe über der Zeit für eine bekannte Kühlvorrichtung für eine Folienproduktionsanlage 20 µm, 525 m/min, einem Gesamtreckverhältnis 50 mit einem Ausstoß am Wickler von 5.000 kg/h;
Fig. 3 eine erste Ausführungsform der Erfindung;
Fig. 4 ein Ausführungsbeispiel der Vorrichtung, das nicht Teil der Erfindung darstellt;
Fig. 5 Ausstoßtabellen für eine konventionelle Kühlanlage (Tabelle a)) und mögliche Ausstoßtabellen für eine erfindungsgemäße Kühlvorrichtung (Tabelle b)); und
Fig. 6 beispielhaft eine Temperaturkurve der erfindungsgemäßen Kühlvorrichtung für eine Folienproduktionsanlage 20 µm, 650 m/min, einem Gesamtreckverhältnis 50 mit einem Ausstoß am Wickler von 10.000 kg/h.

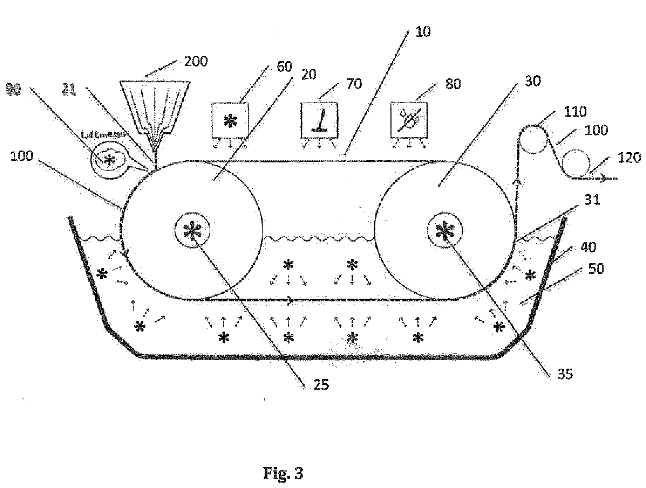

Bei der ersten Ausführungsform der Erfindung gemäß Fig. 3 umfasst die Vorrichtung zum Kühlen von Folienmaterial 100 ein bewegliches Band 10, wobei das Band zur Aufnahme von Folienmaterial 100 an einer ersten vorbestimmten Stelle 21 der Vorrichtung, zum Transport des aufgenommenen Folienmaterials 100 und zur Abgabe des Folienmaterials 100 an einer zweiten vorbestimmten Stelle 31 bestimmt ist, und eine Kühleinrichtung 40, 50, welche zum Kühlen des Bandes 10 und/oder des aufgenommenen Folienmaterials 100 bestimmt ist. Das Band 10 ist ein aus Stahl gefertigtes und vorzugsweise verchromtes Endlosband. Das Band 10 ist über eine erste Walze 20 und eine zweite Walze 30 geführt. Die Walzen 20, 30 dienen der Umlenkung und dem Antrieb des Bandes 10.

Die erste vorbestimmte Stelle 21 befindet sich in Bandlaufrichtung vor Eintritt des Bandes 10 in die Kühleinrichtung 40, 50 und liegt in einem Bereich, wo das Band 10 an der ersten Walze 20 anliegt.

Die Kühleinrichtung umfasst hier ein Kühlflüssigkeitsbad 40, 50. Das Kühlflüssigkeitsbad umfasst einen Behälter 40 mit einem Kühlmedium 50, hier Wasser. Zumindest eine der Walzen 20, 30, in diesem Ausführungsbeispiel beide Walzen 20, 30, sind zumindest teilweise im Kühlflüssigkeitsbad 40, 50 angeordnet.

Die erste vorbestimmte Stelle 21, also diejenige Stelle, an der das Folienmaterial 100 auf das Band 10 aufgebracht wird, befindet sich im Bereich der ersten Walze 20 oberhalb des Wasserspiegels des Kühlflüssigkeitsbad 40, 50. Die erste Walze 20 ist diejenige der beiden Walzen 20, 30, die in Laufrichtung des Bandes der Stelle, an der das Band in das Kühlflüssigkeitsbad 40, 50 eintaucht, näher ist. Damit ist gewährleistet, dass das Folienmaterial rasch nachdem es aufgebracht wurde, in das Wasserbad eingetaucht wird und damit von beiden Seiten gleichmäßig und homogen gekühlt wird.

Für das Aufbringen des Folienmaterials 100 aus der Schmelze ist z.B. eine Extrudiervorrichtung 200 vorhanden. Das dort aufgeschmolzene Granulat kommt über Schmelzeleitungen zu einer Flachdüse, durch welche die Schmelze dann durch den Düsenschlitz auf das Band 10 aufgebracht wird.

Ein Luftmesser 90 sorgt dafür, dass das Folienmaterial 100, wenn es auf das Band 10 auftrifft, dort rasch und gleichmäßig über die Breite des Bandes 10 an die Oberfläche des Bandes angelegt wird. Wenn das Anlegen des Folienmaterials 100 mittels Luftmesser erfolgt, so bringt dies einen Kühleffekt für das Folienmaterial 100 auf der bandabgewandten Seite mit sich.

Das Band 10 mit dem darauf aufgebrachten Folienmaterial 100 wird durch das Kühlflüssigkeitsbad 40, 50 hindurchbewegt. Dabei wird das Folienmaterial 100 weiter abgekühlt.

Das Folienmaterial 100 wird an der zweiten vorbestimmten Stelle 31 vom Band 10 separiert. Die zweite vorbestimmte Stelle 31 befindet sich - selbstverständlich - in Bandlaufrichtung nach der ersten vorbestimmten Stelle 21. Die zweite vorbestimmte Stelle 31 liegt bei dieser Ausführungsform in einem Bereich, wo das Band 10 an der zweiten Walze 30 anliegt.

Nach Separierung wird das Folienmaterial 100 über weitere Rollen 110, 120 geführt und an nachfolgende Einrichtungen zum erneuten Aufheizen und Verstrecken, Schneiden und/oder zum Aufwickeln übergeben.

Des Weiteren kann eine Einrichtung vorhanden sein, welche das Band 10 unter Spannung hält. Diese Einrichtung kann in einer der Walzen 20, 30 integriert sein. Die Spanneinrichtung ist vorteilhaft, wenn sich der Abstand der beiden Walzen 20, 30 verändern lässt und sichergestellt sein muss, dass das Band bei konstanter Bandlänge dennoch für jeden eingestellten Abstand gespannt ist und nicht durchrutscht.

Ein Rutschen des Bandes lässt sich auch durch die Gestaltung der Oberfläche der Walzen und die walzenzugewandten Seite des Bandes verhindern.

Bei einer Abwandlung der ersten Ausführungsform kann der Durchmesser der zweiten Walze 30 kleiner sein als der Durchmesser der ersten Walze 20. Dann kann das Folienmaterial 100 bereits sehr früh und somit nach sehr kurzem Weg im Wasserbad von dem Band 10 gelöst und nach außerhalb des Wasserbades 40, 50 geführt werden. Die zweite Walze 30 ist hier vorzugsweise vollständig außerhalb des Kühlflüssigkeitsbad 40, 50 angeordnet.

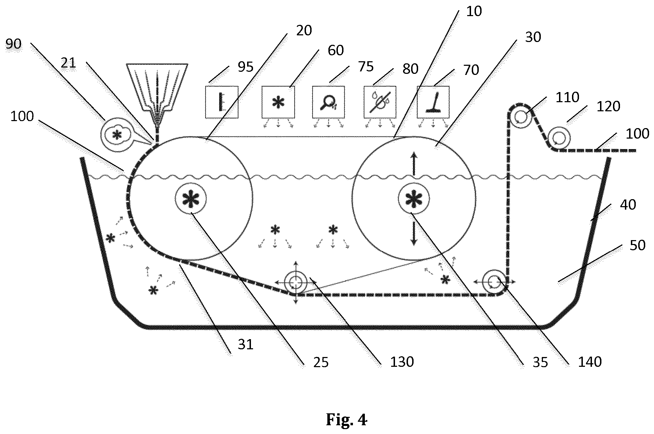

Fig. 4 zeigt ein Ausführungsbeispiel, das nicht Teil der Erfindung darstellt. Bei diesem Ausführungsbeispiel wird das Band noch über eine dritte Walze 130 geführt, die im Wasserbad 40, 50 zwischen den beiden Walzen 20, 30 angeordnet ist. An dieser Walze 130 wird das Folienmaterial 100 vom Band 10 abgelöst und dann über eine vierte Walze 140, die sich ebenfalls im Wasserbad befindet, nach außerhalb des Wasserbads zu den Walzen 110 und 120 geführt.

Die Walzen 130, 140 können vertikal und horizontal verschiebbar sein, so dass die Länge, über die das Folienmaterial im Wasserbad läuft und damit die Kühlleistung, je nach Anforderung individuell variiert werden können. Die Walzen 130, 140 können einen kleineren Durchmesser haben als zumindest die erste Walze 20.

Die dritte Walze 130 (eventuell zusammen mit weiteren Walzen 140) ermöglicht also ein Ablösen des Folienmaterials vom Band an einer beliebigen Stelle und eine flexible Einstellung über eine weitere Umlenkwalze der Distanz, über welche das Folienmaterial im Wasserbad bleibt.

Auch hier ist eine Einrichtung vorhanden, welche das Band 10 unter Spannung hält. Hierzu kann die dritte Walze 130 als Spannmechanismus für das Band 10 ausgestaltet sein.

Die Spannvorrichtung ist auch vorteilhaft, um das Band 10 bei einem Austausch freizugeben. Die Walze 20 ist im laufenden Betrieb stabil und fix zu halten, sie kann nur bei einem Austausch des Bandes in eine kontrollierte Austauschposition gefahren werden. Die Walze 30 und die dritte Walze 130 gewährleisten überdies den Spannungsausgleich des Systems im laufenden Betrieb z.B. bei Folien-Dickenumstellungen.

Ansonsten können alle Ausgestaltungen der Vorrichtung, die weiter oben mit Bezug zur ersten Ausführungsform oder zur abgewandelten ersten Ausführungsform beschrieben sind, einzeln oder in Kombination auf diese zweite Ausführungsform übertragen werden.

Ebenfalls für alle Ausführungsformen gilt:
Vorteilhafterweise trifft das Folienmaterial 100 (die Schmelze) an einer besonders stabilen Stelle des Bandes 10 auf, nämlich dort, wo das Band 10 an der ersten Walze 20 anliegt.

Die Länge des Kühlflüssigkeitsbades 40, 50 kann je nach Kühlanforderung unterschiedlich gestaltet sein. Die Kühlanforderung hängt unter anderem von dem gewünschten Durchsatz der Anlage und den Erfordernissen an die kühlleistungsbestimmten Eigenschafts- und Qualitätskriterien ab. Indem das Band bereichsweise mit Folienmaterial und ohne Folienmaterial zwischen den Walzen 20, 30 frei im Wasserbad 40, 50 verläuft, lassen sich im Prinzip beliebig lange "Kühlstrecken" realisieren. Damit kann auch ein sehr schnell laufendes Band mit Folienmaterial noch ausreichend gekühlt werden. Andererseits kann das Band auf dem "Rückweg" (ohne Folienmaterial) wieder vom Wasser gesäubert und auch gekühlt sowie kontrolliert werden, und die Temperatur kann gemessen werden. Hierzu kann das Band erforderlichenfalls über weitere Rollen an entsprechenden Einrichtungen vorbeigeleitet werden.

Das Wasserbad kann also je nach Auslegung der Anlage sehr viel länger sein als die reine Bandanlage. So können z.B. dickere Folien länger im Wasserbad geführt werden als dünnere Folien. Durch den Wasserkreislauf und die kontrollierte Zuführung des Kaltwassers kann die Kühlung der Folie und des Bandes weiter optimiert und gesteuert werden.

Weil sich Band 10 und Folienmaterial 100 durch das Wasserbad bewegen, können Band und Folienmaterial von beiden Seiten gekühlt werden, was eine gleichmäßigere Abkühlung des Folienmaterials im Querschnitt gewährleistet, aber auch eine schnellere Abkühlung des Folienmaterials ermöglicht.

Anders als bei einer CR ist der Umfang der Walzen 20, 30 hier nicht entscheidend für die Kühlleistung der Anlage. Der Weg, auf dem das Folienmaterial gekühlt wird, wird nicht hauptsächlich durch den Umfang der Walze bestimmt sondern unter anderem durch die Länge des Bereichs, in dem das Band im Wasser läuft oder von anderen Kühleinrichtungen gekühlt wird.

Bei allen Ausführungsformen können eine oder mehrere der folgenden Funktionsgruppen vorhanden sein:
Eine Einrichtung 70 zum Reinigen des Bandes von Verschmutzung. Die Reinigung kann z.B. mittels (Kühl-)Wasser, Bürsten, (kalter) Luft oder einer Kombination davon erfolgen.

Eine Einrichtung 80 zum Entfernen von Wasser (durch Abblasen) auf dem Band. Die Wasserabblasung vom Band ist die erste Einrichtung (in Bandlaufrichtung) bei bzw. nach der Walze 30. Die Wasserabblasung erfolgt mittels möglichst kalter Luft. Die Umgebungstemperatur hier ist relativ hoch, bedingt durch die Extruder, die Schmelzeleitungen und die Düse.

Eine Einrichtung 60 zum zusätzlichen Kühlen des Bandes; soweit erforderlich, kann der Bandrücklauf (also Bereich in Bandlaufrichtung zwischen der zweiten vorbestimmten Stelle 31 und der ersten vorbestimmten Stelle 21) auch verwendet werden, um das Band zusätzlich zu kühlen. Dabei können alle technisch möglichen Kühlmethoden zum Einsatz kommen.

Einrichtungen 75 zur Kontrolle des Bandes auf Beschädigungen und/oder Rückständen. Diese Einrichtungen befinden sich im Bereich des Bandes zwischen der zweiten vorbestimmten Stelle 31 und der ersten vorbestimmten Stelle 21 und arbeiten auf dem Band bzw. kontrollieren das Band außerhalb des Wasserbades gewissermaßen "auf dem Rückweg" zu derjenigen Stelle, wo das Folienmaterial 100 aufgebracht wird.

Ebenfalls vorhanden sein können Einrichtungen 95 zur Messung der Temperatur des Bandes, des Folienmaterials und des Wasserbades. Es können Messeinrichtungen vorgesehen sein, welche die exakte Temperatur des Bandes unmittelbar vor dem Auftreffen der neuen Schmelze messen und damit eine genaue Regelung des gesamten Kühlprozesses von der Walzen - bis zur Wassertemperatur und allen Kühleinrichtungen erlauben.

Danach kann eine optische automatische Reinigungskontrolle erfolgen, welche mit der Reinigungsintensität interagiert.

Vorteilhafterweise kann der jeweils notwendige Platz durch die entsprechende Länge des Bandes geschaffen werden.

Was den Antrieb des Bandes 10 anbelangt, so kann dieser gleichförmig und entsprechend regelbar mit der jeweils optimalen Bandlaufgeschwindigkeit erfolgen. Der Antrieb kann bei der vorliegenden Erfindung, da zwei Walzen 20, 30 dafür zur Verfügung stehen, über beide mittels elektronisch geregelter Direktantriebe erfolgen oder über eine der beiden Walzen.

Solange sichergestellt ist, dass das Band absolut gleichförmig läuft, ist es vorteilhaft, nur eine der Walzen 20, 30 anzutreiben, insbesondere die zweite Walze 30, die wie oben beschrieben auch kleiner dimensioniert sein kann als die erste Walze 20 und deren Achse oder auch die gesamte Walze auch außerhalb des Wassers liegen kann.

Was die Gestaltung der Walzen 20, 30 anbelangt, können eine oder beide seitlich geschlossen und innen gekühlt sein. Hierfür können eine oder beide Walzen 20, 30 jeweils eine walzeninnere Kühleinrichtung 25, 35 zur Kühlung des Bandes umfassen.

Alternativ hierzu können eine oder beide Walzen 20, 30 ganz oder teilweise seitlich geöffnet sein, so dass sie wie ein offenes Wasserrad im Wasserbad laufen. Die Zuführung von kaltem Wasser kann entsprechend gesteuert werden.

Die erste Walze 20 kann ihre Achse im Wasserbad haben und kann, sofern sie nicht als offenes Wasserrad läuft, Kühlmedium zur Kühlung von innen zugeführt bekommen. Durch Verteilen der beschriebenen Funktionen auf die beiden Walzen 20, 30, also Kühlung durch die erste Walze 20, Antrieb durch die zweite Walze 30, wird die Komplexität der einzelnen Walzen verringert.

Zusammengefasst ist ein besonderer Vorteil ist, dass ein langes und flaches Kühlflüssigkeitsbad ermöglicht wird, welches durch den geringen Walzendurchmesser bei Verwendung des Bandes möglich wird. Damit hat man in Vergleich zum hohen und kurzen Wasserbad einer konventionellen CR bessere Möglichkeiten, die Wassermenge und Temperatur zu steuern, und auch eine größere Menge und Oberfläche, welche leichter zu reinigen ist. Auch kann das Folienmaterial leichter von Verschmutzungen, welche diese aus dem Wasserbad mitnimmt, gereinigt werden. Das Wasser kann durch gezielte Zuleitung von Kühlflüssigkeit an den Stellen, wo es tatsächlich benötigt wird, bezüglich seiner Temperatur besser kontrolliert werden. Das lange Wasserbad ist leichter zugänglich (z.B. für das Einfädeln der Folie) und es hat eine größere Wasserfläche, wo Verunreinigungen hinströmen können und dann abgeschöpft werden können, sodass diese nicht wieder auf das Band oder auf die Folie gelangen. Das ist ein erhebliches Problem bei der CR, sie nimmt praktisch alle Verunreinigungen auf. Auch deshalb lässt man die Folie so lange wie möglich auf der CR, lässt somit diese Verunreinigungen auf der Folie bleiben und nicht auf die CR gelangen. An den Rändern bauen diese sich aber trotzdem auf.

Mit der erfindungsgemäßen Kühlvorrichtung lassen sich überdies höhere Folien-Ausstoßleistungen erzielen. Fig. 5 zeigt zunächst Tabelle a) für eine bekannte Anlage mit Kühlung mittels Chill Roll. Hier erreicht man mit der schnellsten Maschine 525 m/min für BOPP bei einer max. Kühlleistung bezogen auf Folie am Wickler (nach Randbeschnitt) von 5.000 kg/h. Tabelle b) der Fig. 5 gilt für eine erfindungsgemäße Anlage mit Bandkühlung, ausgelegt auf eine maximale Kühlleistung von 10.000 kg/h und eine Geschwindigkeit von 650 m/min zu sonst gleichen Bedingungen. Mit der erfindungsgemäßen Kühlvorrichtung lässt sich, sofern die vor und nachgelagerten Anlagenteile solches erlauben, also ein höherer Folien-Ausstoß erzielen.

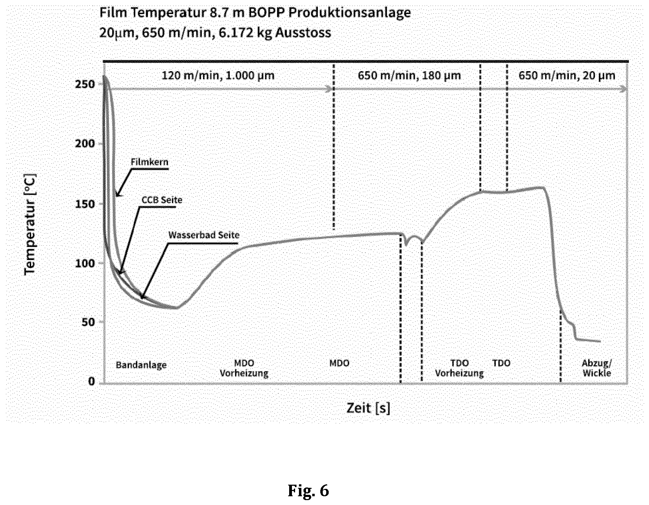

Fig. 6 zeigt eine Temperaturkurve der erfindungsgemäßen Kühlvorrichtung für eine Folienproduktionsanlage 20 µm, 650 m/min, einem Gesamtreckverhältnis 50 mit einem Ausstoß am Wickler von 10000 kg/h. Wie zu erkennen ist, fallen die Temperaturkurven für den Filmkern (das Filminnere), die bandabgewandte Seite sowie die bandzugewandte Seite nahezu gleich steil ab und treffen sich bereits bei einer höheren Temperatur, hier im Beispiel bei etwa 60 Grad. Bei der bekannten CR-Anlage (Fig. 2) verlaufen die drei Temperaturkurven deutlich unterschiedlich und treffen sich erst bei einer weit stärkeren Abkühlung herunter auf etwa 30 Grad.

Bei einer weiteren Ausführungsform der Erfindung wird auf das Kühlflüssigkeitsbad verzichtet. Hier wird das Folienmaterial durch das Band 10 gekühlt. Hierzu kann das Band 10 seinerseits wird durch zumindest eine der Walzen 20, 30 gekühlt sein. Die Walze 20 und/oder die Walze 30 kann dann von der Walzeninnenseite gekühlt sein, kann also eine walzeninnere Kühleinrichtung 25, 35 umfassen.

Diese Ausführungsform eignet sich besonders für Folienmaterial aus Polyester (z.B. PET) und allen Folienmaterialien bei welchen der Einsatz eines Wasserbades zur Kühlung nicht möglich ist, das aus einer sehr heißen Schmelze auf das Band aufgebracht wird. Hier erfolgt die Kühlung des Folienmaterials 100 also über das Band 10, das heißt von der bandzugewandten Seite des Folienmaterials 100. Die Kühlleistung des Bandes 10 wird hier insbesondere über die Temperatur des Bandes 10 beim Auftreffen der Schmelze, die Kühlung des Bandes durch die gekühlte Umlenkwalze(n) und die Länge des Bereiches bestimmt, in dem das Folienmaterial 100 auf dem Band 10 anliegt und von dem Band 10 transportiert wird. Die Vorteile aus der Länge des Bandes, seiner leichteren Kühlung, Reinigung Kontrolle und Messung gelten entsprechend.

Eine dritte Walze 130 oder weitere Walzen sind hier von Vorteil, um den Kontakt des Folienmaterials 100 mit dem Band 10 und somit die Kühlung zu verbessern.

Bei dieser Ausführungsform ist eine elektrostatische Pinning-Einrichtung zum raschen und gleichmäßigen Anlegen des Folienmaterials über die Breite des Bands 10 vorgesehen

Für diese Ausführungsform gelten ansonsten die oben beschriebenen Ausgestaltungen und die Vorteile (z.B. Kühlung, Reinigung, Messung) entsprechend.

Die erfindungsgemäße Vorrichtung in allen beschriebenen Ausführungsformen und Varianten kann in eine "Drive Side" und eine "Operation Side" unterteilt sein, Die Drive Side enthält alle Antriebe, Motoren, Leitungen, und die Operation Side, die für Reinigungs- und Wartungsarbeiten geöffnet werden kann.

## Patentansprüche

1. Vorrichtung zum Kühlen von Folienmaterial (100) für Reckfolien, aufweisend:
ein bewegliches Band (10), wobei das Band (10) zur Aufnahme des Folienmaterials (100) an einer ersten vorbestimmten Stelle (21) der Vorrichtung, zum Transport des aufgenommenen Folienmaterials (100) und zur Abgabe des Folienmaterials (100) an einer zweiten vorbestimmten Stelle (31) bestimmt ist,
wobei das Band (10) ein aus Stahl gefertigtes Endlosband ist, eine erste Walze (20) und eine zweite Walze (30), wobei das Band (10) über die erste Walze (20) und über die zweite Walze (30) geführt ist,
wobei die Vorrichtung ausgestaltet ist, das aufgenommene Folienmaterial (100) und/oder das Band (10) zu kühlen,
ein Kühlflüssigkeitsbad (40, 50), wobei das Band (10) und das Folienmaterial (100) durch das Kühlflüssigkeitsbad (40, 50) hindurch bewegbar sind,
wobei die erste vorbestimmte Stelle (21) in einem Bereich liegt, wo das Band (10) an der ersten Walze (20) anliegt und die erste Walze (20) in Drehrichtung zusammen mit dem Band (10) in das Kühlflüssigkeitsbad (40, 50) eingetaucht ist,
wobei die zweite vorbestimmte Stelle (31) in einem Bereich liegt, wo das Band (10) an der zweiten Walze (30) anliegt, **gekennzeichnet durch**
eine Einrichtung (80) zum Entfernen von Wasser auf dem Band durch Abblasen, wobei die Abblasung die erste Einrichtung in Bandlaufrichtung bei der zweiten Walze (30) ist.

2. Vorrichtung gemäß dem Anspruch 1, weiter aufweisend: Eine Einrichtung (110, 120, 130, 140) zum Separieren des Folienmaterials (100) vom Band (10) an der zweiten vorbestimmten Stelle (31).

3. Vorrichtung gemäß einem der Ansprüche 1 bis 2, wobei zumindest eine der Walzen (20, 30) seitlich zumindest teilweise geschlossen ist.

4. Vorrichtung gemäß einem der Ansprüche 1 bis 3, wobei zumindest eine der Walzen (20, 30) seitlich zumindest teilweise geöffnet ist.

## Claims

1. Device for cooling film material (100) for stretch films, comprising:
a movable belt (10), the belt (10) being intended for receiving the film material (100) at a first predetermined position (21) of the device, for transporting the received film material (100), and for discharging the film material (100) at a second predetermined position (31),
the belt (10) being a continuous belt made from steel,
a first roller (20) and a second roller (30), the belt (10) being guided over the first roller (20) and over the second roller (30),
the device being designed to cool the received film material (100) and/or the belt (10),
a cooling liquid bath (40, 50), the belt (10) and the film material (100) being movable through the cooling liquid bath (40, 50),
the first predetermined position (21) being located in a region in which the belt (10) rests against the first roller (20) and the first roller (20) together with the belt (10) is immersed into the cooling liquid bath (40, 50) in the direction of rotation,
the second predetermined position (31) being located in a region in which the belt (10) rests against the second roller (30),
**characterized by**
a means (80) for removing water on the belt by blowing, the blowing device being the first means in the belt travel direction at the second roller (30).

2. Device according to claim 1, further comprising:
a means (110, 120, 130, 140) for separating the film material (100) from the belt (10) at the second predetermined position (31).

3. Device according to either claim 1 or claim 2, wherein at least one of the rollers (20, 30) is at least partially closed laterally.

4. Device according to any of claims 1 to 3, wherein at least one of the rollers (20, 30) is at least partially open laterally.

## Revendications

1. Dispositif de refroidissement de matériau en feuille (100) pour feuilles étirables, comprenant :
une bande (10) mobile, la bande (10) étant conçue pour recevoir le matériau en feuille (100) à un premier emplacement prédéfini (21) du dispositif, pour transporter ledit matériau en feuille (100) et pour distribuer le matériau en feuille (100) à un second emplacement prédéfini (31),
la bande (10) étant une bande sans fin en acier,
un premier rouleau (20) et un second rouleau (30), la bande (10) étant guidée par le premier rouleau (20) et par le second rouleau (30),
le dispositif étant conçu pour refroidir le matériau en feuille (100) reçu et/ou la bande (10),
un bain de liquide de refroidissement (40, 50), la bande (10) et le matériau en feuille (100) pouvant être déplacés à travers le bain de liquide de refroidissement (40, 50),
le premier emplacement prédéfini (21) se situant dans une zone où la bande (10) repose contre le premier rouleau (20) et où le premier rouleau (20) est immergé avec la bande (10) dans le bain de liquide de refroidissement (40, 50), dans le sens de rotation,
le second emplacement prédéfini (31) se situant dans une zone où la bande (10) repose contre le second rouleau (30),
**caractérisé par**
un système (80) d'évacuation d'eau sur la bande par vidange, la vidange étant le premier système dans le sens de défilement de bande au niveau du second rouleau (30).

2. Dispositif selon la revendication 1, comprenant en outre :
un système (110, 120, 130, 140) de séparation du matériau en feuille (100) de la bande (10) au second emplacement prédéfini (31).

3. Dispositif selon l'une des revendications 1 à 2, dans lequel au moins un des rouleaux (20, 30) est au moins partiellement fermé latéralement.

4. Dispositif selon l'une des revendications 1 à 3, dans lequel au moins un des rouleaux (20, 30) est au moins partiellement ouvert latéralement.
